(19) Europäisches Patentamt / European Patent Office / Office européen des brevets

(11) **EP 4 564 447 A1**

(12) **EUROPEAN PATENT APPLICATION**
published in accordance with Art. 153(4) EPC

(43) Date of publication:
**04.06.2025 Bulletin 2025/23**

(21) Application number: **22964650.0**

(22) Date of filing: **07.11.2022**

(51) International Patent Classification (IPC):
*H01M 4/13* (2010.01)     *H01M 10/0587* (2010.01)

(52) Cooperative Patent Classification (CPC):
**H01M 10/0587; H01M 4/13; H01M 10/0431;
H01M 10/0525;** H01M 2004/021; H01M 2004/027;
H01M 2004/028; H01M 2220/20; Y02E 60/10;
Y02P 70/50

(86) International application number:
**PCT/CN2022/130207**

(87) International publication number:
**WO 2024/098171 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central, Hong Kong (HK)**

(72) Inventors:
• **CHENG, Zhipeng**
  **Ningde, Fujian 352100 (CN)**
• **DENG, Yaqian**
  **Ningde, Fujian 352100 (CN)**
• **LIU, Zhi**
  **Ningde, Fujian 352100 (CN)**
• **LV, Ruijing**
  **Ningde, Fujian 352100 (CN)**
• **CHEN, Ning**
  **Ningde, Fujian 352100 (CN)**
• **JIN, Haizu**
  **Ningde, Fujian 352100 (CN)**
• **LI, Baiqing**
  **Ningde, Fujian 352100 (CN)**

(74) Representative: **Gong, Jinping
CocreateIP
Neumarkterstr. 21
81673 München (DE)**

(54) **BATTERY CELL AND PREPARATION METHOD THEREFOR, SECONDARY BATTERY, AND ELECTRICAL APPARATUS**

(57)     The present application provides a battery cell, a preparation method therefor, a secondary battery, and a power consuming device. The battery cell is formed by winding a negative electrode plate, a positive electrode plate, and a separator positioned between the negative electrode plate and the positive electrode plate, wherein the negative electrode plate has a negative electrode curved surface area, and the positive electrode plate has a positive electrode curved surface area; and at least one curved surface area group composed of the negative electrode curved surface area and the positive electrode curved surface area positioned outside and adjacent to the negative electrode curved surface area is included at a corner of the battery cell, and at least one curved surface area group in the battery cell meets the following condition: a ratio in surface capacity between the two opposite surfaces of the negative electrode curved surface area and the positive electrode curved surface area is ≥ 1.

FIG. 1

EP 4 564 447 A1

## Description

## Technical Field

The present application relates to the field of secondary batteries, and more particularly to a battery cell, a preparation method therefor, a secondary battery, and a power consuming device.

## Background Art

The statements herein merely provide background information related to the present application and do not necessarily constitute prior art.

In secondary batteries, lithium precipitation in a negative electrode is mainly characterized in that lithium ions cannot be inserted into the negative electrode but form an elemental lithium on the surface of the negative electrode, which is an important factor affecting the battery performance. The lithium precipitation in a negative electrode may cause problems such as reduction in battery capacity, reduction in battery life, and even thermal runaway of the batteries. Especially, at a corner of a wound battery cell, a positive electrode plate in a curved surface area has a different size from a negative electrode plate. At this time, the problem of the lithium precipitation in a negative electrode more easily appears in the wound battery cell. Therefore, how to avoid the problem of the lithium precipitation in a negative electrode of the wound battery cell is of a great significance with respect to the performance improvement of the batteries.

## Summary of the invention

Based on the above problems, the present application provides a battery cell, a preparation method therefor, a secondary battery, and a power consuming device, can effectively avoid the problem of lithium precipitation in a negative electrode of a wound battery cell, and further improves the performances of the batteries.

In order to realize the above objective, a first aspect of the present application provides a battery cell formed by winding a negative electrode plate, a positive electrode plate, and a separator positioned between the negative electrode plate and the positive electrode plate, wherein the negative electrode plate has a negative electrode curved surface area, and the positive electrode plate has a positive electrode curved surface area; and at least one curved surface area group composed of the negative electrode curved surface area and the positive electrode curved surface area positioned outside and adjacent to the negative electrode curved surface area is included at a corner of the battery cell, and at least one of the curved surface area group in the battery cell meets the following condition: a ratio of in surface capacity of the two opposite surfaces of the negative electrode curved surface area and the positive electrode curved surface area is ≥ 1.

In the battery cell of the present application, the surface capacities of the two opposite surfaces of the negative electrode curved surface area and the positive electrode curved surface area in the curved surface area group are designed, such that the ratio in surface capacity of the two opposite surfaces of the negative electrode curved surface area and the positive electrode curved surface area is ≥ 1, the lithium intercalation capacity of the negative electrode plate can be matched with the lithium de-intercalation capacity of the positive electrode plate at the corner of the battery cell, the problem of lithium precipitation in a negative electrode at the corner of the battery cell is effectively avoided, and the performances of the battery can be improved.

In some of the embodiments, the negative electrode plate comprises a negative electrode current collector, a base negative electrode active layer, and a modified negative electrode active layer; and the base negative electrode active layer is located at least on a surface of an outside of the negative electrode current collector, the modified negative electrode active layer is located at a surface of the base negative electrode active layer of an outside of the negative electrode curved surface area, and the surface density of the modified negative electrode active layer is less than that of the base negative electrode active layer of the outside of the negative electrode curved surface area.

In some of the embodiments, a plurality of the curved surface area groups are included, and the surface density of the modified negative electrode active layer in each curved surface area group is gradually reduced along the direction from inside to outside of the battery cell.

In some of the embodiments, along the direction from inside to outside of the battery cell, the surface density of the modified negative electrode active layer in the adjacent curved surface area groups is reduced at a level of 1.6 mg/1540.25 mm$^2$-45 mg/1540.25 mm$^2$.

In some of the embodiments, the surface density of the modified negative electrode active layer in each curved surface area group satisfies formula (I):

$$CW_n = (1 - \frac{L_{an}}{L_{cn}}) \times CW_a \quad \text{formula (I)},$$

wherein $CW_n$ represents a surface density of the modified negative electrode active layer in the nth curved surface area group, $CW_a$ represents a surface density of the base negative electrode active layer of an outside of the negative electrode curved surface area, $L_{an}$ represents an arc length of the negative electrode current collector of the negative electrode curved surface area in the nth curved surface area group, $L_{cn}$ represents an arc length of a positive electrode current collector of the positive electrode curved surface area in the nth curved surface area group, and n is a positive integer $\geq 1$.

In some of the embodiments, $L_{an}$ and $L_{cn}$ satisfy formula (II) and formula (III) respectively:

$$L_{an} = \pi \times b_n + 2(\sqrt{\frac{a_n^2}{2} - \frac{b_n^2}{4}} - b_n) \quad \text{formula (II);}$$

and

$$L_{cn} = \pi \times (b_n + \lambda_n) + 2(\sqrt{\frac{(a_n+\lambda_n)^2}{2} - \frac{(b_n+\lambda_n)^2}{4}} - b_n) \quad \text{formula (III),}$$

wherein $a_n$ represents a length of a short axis of the negative electrode current collector of the negative electrode curved surface area in the nth curved surface area group, $b_n$ represents a length of a long axis of the negative electrode current collector of the negative electrode curved surface area in the nth curved surface area group, $\lambda_n$ represents a difference between a curvature radius of the positive electrode current collector of the positive electrode curved surface area and a curvature radius of the negative electrode current collector of the negative electrode curved surface area in the nth curved surface area group, and $\pi$ represents the ratio of circumference to diameter.

In some of the embodiments, a plurality of the curved surface area groups is included, and the surface densities of the modified negative electrode active layers in each curved surface area group are equal.

In some of the embodiments, the surface density of the modified negative electrode active layer in each curved surface area group satisfies formula (IV):

$$CW_0 = (1 - \frac{L_{a0}}{L_{c0}}) \times CW_a \quad \text{formula (IV),}$$

wherein $CW_0$ represents a surface density of the modified negative electrode active layer in each curved surface area group, $CW_a$ represents a surface density of the base negative electrode active layer of an outside of the negative electrode curved surface area, $L_{a0}$ represents an arc length of the negative electrode current collector of the negative electrode curved surface area in the innermost layer curved surface area group, and $L_{c0}$ represents an arc length of the positive electrode current collector of the positive electrode curved surface area in the innermost layer curved surface area group.

In some of the embodiments, $L_{a0}$ and $L_{c0}$ satisfy formula (V) and formula (VI) respectively:

$$L_{a0} = \pi \times b_0 + 2(\sqrt{\frac{a_0^2}{2} - \frac{b_0^2}{4}} - b_0) \quad \text{formula (V);}$$

$$L_{c0} = \pi \times (b_0 + \lambda_0) + 2(\sqrt{\frac{(a_0+\lambda_0)^2}{2} - \frac{(b_0+\lambda_0)^2}{4}} - b_0) \quad \text{formula (VI),}$$

wherein $a_0$ represents a length of a short axis of the negative electrode current collector of the negative electrode curved surface area in the innermost layer curved surface area group, $b_0$ represents a length of a long axis of the negative electrode current collector of the negative electrode curved surface area in the innermost layer curved surface area group, $\lambda_0$ represents a difference between a curvature radius of the positive electrode current collector of the positive electrode curved surface area and a curvature radius of the negative electrode current collector of the negative electrode curved surface area in the innermost layer curved surface area group, and $\pi$ represents the ratio of circumference to diameter.

In some of the embodiments, 1 of the curved surface area group is included, and the surface density of the modified negative electrode active layer in the curved surface area group satisfies formula (IV), wherein $CW_0$ represents the surface density of the modified negative electrode active layer in the curved surface area group.

In some of the embodiments, $L_{a0}$ and $L_{c0}$ in formula (IV) respectively satisfy formula (V) and formula (VI), wherein $a_0$ represents a length of a short axis of the negative electrode current collector of the negative electrode curved surface area in the curved surface area group, $b_0$ represents a length of a long axis of the negative electrode current collector of the negative electrode curved surface area in the curved surface area group, $\lambda_0$ represents a difference between a curvature radius of the positive electrode current collector of the positive electrode curved surface area and a curvature radius of the negative electrode current collector of the negative electrode curved surface area in the curved surface area group, and $\pi$ represents the ratio of circumference to diameter.

In some of the embodiments, a ratio of the thickness of the base negative electrode active layer to that of the modified negative electrode active layer is (1-22) : 1.

In some of the embodiments, the thickness of the base negative electrode active layer is 65 $\mu$m-180 $\mu$m.

In some of the embodiments, the thickness of the modified negative electrode active layer is 12 $\mu$m-32 $\mu$m.

In some of the embodiments, the surface density of the base negative electrode active layer is 90 mg/1540.25 mm$^2$-250 mg/1540.25 mm$^2$.

In some of the embodiments, the surface density of the modified negative electrode active layer in the innermost layer curved surface area group is 16.2 mg/1540.25 mm$^2$-45 mg/1540.25 mm$^2$.

In some of the embodiments, the positive electrode plate comprises a positive electrode current collector and a positive electrode active layer positioned on a surface of an inside of the positive electrode current collector.

In some of the embodiments, the thickness of the positive electrode active layer is 65 $\mu$m-160 $\mu$m.

In some of the embodiments, the surface density of the positive electrode active layer is 150 $\mu$m-400 $\mu$m.

A second aspect of the present application provides a method for preparing a battery cell according to the first aspect, the method comprising the following steps:

determining a preset negative electrode curved surface area and a preset positive electrode curved surface area according to a winding process, such that at least one preset curved surface area group composed of the preset negative electrode curved surface area and the preset positive electrode curved surface area positioned outside and adjacent to the preset negative electrode curved surface area is included at a corner of the battery cell; and adjusting a ratio in surface capacity of the two opposite surfaces of the preset negative electrode curved surface area and the preset positive electrode curved surface area in the preset curved surface area group such that the ratio is $\geq 1$.

A third aspect of the present application provides a secondary battery comprising a battery cell according to the first aspect.

A fourth aspect of the present application provides a power consuming device, comprising a secondary battery according to the third aspect.

**Brief Description of the Drawings**

In order to illustrate the technical solutions of the present application more clearly, the drawings used in the present application will be described briefly below. Apparently, the drawings described below are merely some embodiments of the present application, and those of ordinary skill in the art may derive other drawings from these drawings without creative efforts.

Fig. 1 is a schematic diagram of a curved surface area group of a battery cell in an embodiment of the present application.
Fig. 2 is a schematic diagram of a preset curved surface area and a preset flat surface area of an electrode plate determined by a winding process in an embodiment of the present application.
Fig. 3 is a schematic diagram of a secondary battery according to an embodiment of the present application.
Fig. 4 is an exploded view of the secondary battery according to an embodiment of the present application shown in Fig. 3.
Fig. 5 is a schematic diagram of a battery module according to an embodiment of the present application.
Fig. 6 is a schematic diagram of a battery pack according to an embodiment of the present application.
Fig. 7 is an exploded view of the battery pack according to an embodiment of the present application shown in Fig. 6.
Fig. 8 is a schematic diagram of a power consuming device using a secondary battery according to an embodiment of the present application as a power source.
Fig. 9 is a topography of a disassembled negative electrode plate of a battery cell after formation in example 1.
Fig. 10 is a topography of a disassembled negative electrode plate of a battery cell after formation in example 4.
Fig. 11 is a topography of a disassembled negative electrode plate of a battery cell after formation in comparative example 1.

Description of reference signs:

100. negative electrode current collector; 101. base negative electrode active layer; 102. modified negative electrode active layer; 200. positive electrode current collector; 201. positive electrode active layer; 300. electrode plate; 301. preset curved surface area; 302. preset flat surface area; 1. battery pack, 2. upper box body; 3. lower box body; 4.

battery module; 5. secondary battery; 51. housing; 52. electrode assembly; 53. cover plate; 6. power consuming device.

In order to better describe and/or illustrate embodiments and/or examples of the inventions disclosed herein, reference may be made to one or more of the accompanying drawings. The additional details or examples used to describe the accompanying drawings should not be considered to limit the scope of the disclosed invention, the presently described embodiments and/or examples, and any of the best modes of the presently understood applications.

**Detailed Description of Embodiments**

In order to facilitate the understanding of this application, the application is described more comprehensively below with reference to the accompanying drawings. The preferred embodiments of the present application are given in the accompanying drawings. However, the present application may be implemented in many different forms and is not limited to the examples described herein. On the contrary, these examples are provided, so that the disclosure of the present application is the understanding of more thoroughly and comprehensively.

Unless otherwise defined, all technical and scientific terms used herein have the same meaning as that commonly understood by a person skilled in the art of the present application. The terms used herein are merely for the purpose of describing specific examples, and are not intended to limit the present application. As used herein, the term "and/or" includes any and all combinations of one or more related items listed.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed in the text, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Unless otherwise stated, the terms used in the present application have the meaning well-known to those skilled in the art. Unless otherwise stated, the values of the parameters mentioned in the present application may be measured by various measurement methods commonly used in the art (for example, may be measured according to the method illustrated in the examples of the present application).

The present application provides a battery cell formed by winding a negative electrode plate, a positive electrode plate, and a separator positioned between the negative electrode plate and the positive electrode plate, wherein the negative electrode plate has a negative electrode curved surface area, and the positive electrode plate has a positive electrode curved surface area; and at least one curved surface area group composed of the negative electrode curved surface area and the positive electrode curved surface area positioned outside and adjacent to the negative electrode curved surface area is included at a corner of the battery cell, and at least one curved surface area group in the battery cell meets the following condition: a ratio in surface capacity between the two opposite surfaces of the negative electrode curved surface area and the positive electrode curved surface area is $\geq 1$.

It can be understood that in winding the battery cell, the winding causes bending deformation of the partial of the electrode plate region, and the positions where the bending deformation occurs and have a certain curvature are a corner of the wound battery cell in the present application.

At the corner of the wound battery cell, the positive electrode plate has a different size from the negative electrode plate, and as a result, the problem of the lithium precipitation in a negative electrode more easily appears in the corner of the battery cell. In the battery cell of the present application, the surface capacities of the two opposite surfaces of the negative electrode curved surface area and the positive electrode curved surface area in the curved surface area group are designed, such that the ratio in surface capacity of the two opposite surfaces of the negative electrode curved surface area and the positive electrode curved surface area is $\geq 1$, the lithium intercalation capacity of the negative electrode plate can be matched with the lithium de-intercalation capacity of the positive electrode plate at the corner of the battery cell, the problem of lithium precipitation in a negative electrode at the corner of the battery cell is effectively avoided, and the performances of the battery can be improved.

In one embodiment, at least one curved surface area group composed of the negative electrode curved surface area and the positive electrode curved surface area positioned outside and adjacent to the negative electrode curved surface area is included at a corner of the battery cell, and all the curved surface area groups in the battery cell meet the following condition: a ratio in surface capacity between the two opposite surfaces of the negative electrode curved surface area and the positive electrode curved surface area is $\geq 1$.

It can be understood that the surface capacities of the two opposite surfaces of the negative electrode curved surface area and the positive electrode curved surface area indicate the surface capacities of the opposite surface of the negative electrode curved surface area and the positive electrode curved surface area, and a ratio of the surface capacity of the opposite surface of the positive electrode curved surface area and the negative electrode curved surface area.

It can also be understood that at least one curved surface area group composed of the negative electrode curved surface area and the positive electrode curved surface area positioned outside and adjacent to the negative electrode curved surface area is included, indicating that one or more curved surface area groups exist in the battery cell. For example, the number of the curved surface area groups may be 1, 2, 3, 4, 5, 6, 7, 8, etc.

It can further be understood that in the battery cell, the negative electrode plate further has a negative electrode flat surface area, and the negative electrode flat surface area is connected with the negative electrode curved surface area. The positive electrode plate further has a positive electrode flat surface area, and the positive electrode flat surface area is connected with the positive electrode curved surface area. The negative electrode curved surface area and the positive electrode curved surface area are positioned at the corners of the battery cell, and the negative electrode flat surface area and the positive electrode flat surface area are positioned in a flat area of the battery cell.

In an embodiment, the surface capacities of the base negative electrode active layers in the negative electrode curved surface area and the negative electrode flat surface area of the negative electrode plate are equal. Optionally, the surface densities of the base negative electrode active layers throughout the negative electrode plate are equal.

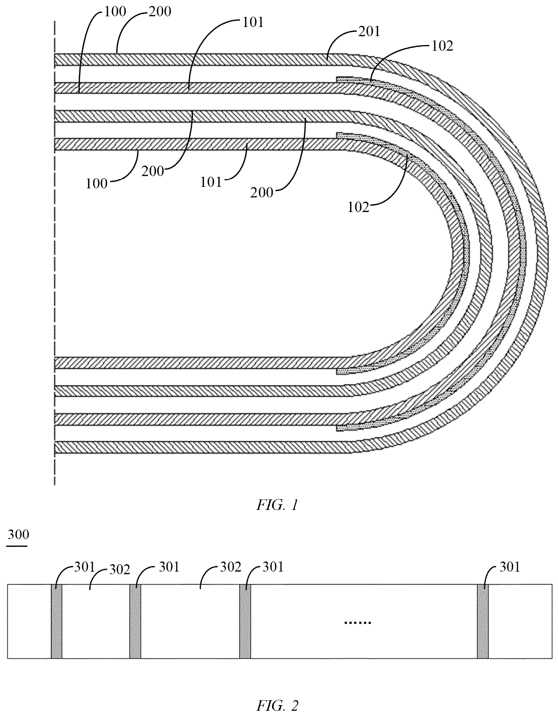

Referring to as FIG. 1, a schematic diagram of a curved surface area group of a battery cell in an embodiment of the present application is shown. At least one curved surface area group composed of the negative electrode curved surface area and the positive electrode curved surface area positioned outside and adjacent to the negative electrode curved surface area is included at a corner of the battery cell. Specifically, 2 curved surface area groups are shown in FIG. 1. More specifically, the negative electrode plate comprises a negative electrode current collector 100, a base negative electrode active layer 101, and a modified negative electrode active layer 102; and the base negative electrode active layer 101 is positioned at least on a surface of an outside of the negative electrode current collector 100, and the modified negative electrode active layer 102 is positioned on a surface of the base negative electrode active layer 101 on an outside of the negative electrode curved surface area. The positive electrode plate comprises a positive electrode current collector 200 and a positive electrode active layer 201 positioned on a surface of an inside of the positive electrode current collector 200.

It can be understood that the material of the base negative electrode active layer 101 and the material of the modified negative electrode active layer 102 are the same or different. Optionally, the material of the modified negative electrode active layer 102 comprises at least one of a carbon material and a silicon-based material. Optionally, the carbon material comprises one or more of ordinary graphite, fast-charge graphite, and artificial graphite. The silicon-based material comprises one or more of elemental silicon, a silicon oxide compound, a silicon carbon composite, a silicon nitrogen composite, and a silicon alloy. Optionally, the silicon-based material comprises one or more of a silicon oxide compound and a silicon carbon composite.

It can be understood that the battery cell is of a wound structure, and the direction from inside to outside of the battery cell indicates the direction from an inside of the battery cell to an outside of the battery cell in the thickness direction of the electrode plate. The outside of the negative electrode current collector 100 indicates a side of the negative electrode current collector 100 facing the positive electrode curved surface area in the curved surface area group where the negative electrode current collector 100 is positioned, and the inside of the positive electrode current collector 200 indicates a side of the positive electrode current collector 200 facing the negative electrode curved surface area in the curved surface area group where the positive electrode current collector 200 is positioned.

In an embodiment, the surface density of the modified negative electrode active layer is smaller than that of the base negative electrode active layer outside the negative electrode curved surface area. By arranging the modified negative electrode active layer on a surface of the base negative electrode active layer of the negative electrode curved surface area, the surface capacity of a surface outside the negative electrode curved surface area can be adjusted, such that the ratio in surface capacity of the two opposite surfaces of the negative electrode curved surface area and the positive electrode curved surface area is $\geq 1$, the lithium intercalation capacity of the negative electrode plate can be matched with the lithium de-intercalation capacity of the positive electrode plate at the corner of the battery cell, and the problem of lithium precipitation in a negative electrode at the corner of the battery cell is effectively avoided.

In an embodiment, a plurality of the curved surface area groups are included, and the surface density of the modified negative electrode active layer in each surface area group is gradually reduced along the direction from inside to outside of the battery cell.

Optionally, along the direction from inside to outside of the battery cell, the surface density of the modified negative electrode active layer in the adjacent curved surface area groups is reduced at a level of 1.6 mg/1540.25 mm$^2$-45 mg/1540.25 mm$^2$. For example, the surface density of the modified negative electrode active layer in the adjacent curved surface area groups can be, but not limited to at a level of 1.6 mg/1540.25 mm$^2$, 2 mg/1540.25 mm$^2$, 5 mg/1540.25 mm$^2$, 10 mg/1540.25 mm$^2$, 15 mg/1540.25 mm$^2$, 17.6 mg/1540.25 mm$^2$, 20 mg/1540.25 mm$^2$, 25 mg/1540.25 mm$^2$, 30 mg/1540.25 mm$^2$, 35 mg/1540.25 mm$^2$, 40 mg/1540.25 mm$^2$, 45 mg/1540.25 mm$^2$, etc. It can be understood that the surface density of the modified negative electrode active layer in the adjacent curved surface area groups can be reduced at a level appropriately selected at a level of 1.6 mg/1540.25 mm$^2$-45 mg/1540.25 mm$^2$.

In an embodiment, the surface density of the modified negative electrode active layer in each curved surface area group satisfies formula (I):

$$CW_n = (1 - \frac{L_{an}}{L_{cn}}) \times CW_a \quad \text{formula (I),}$$

wherein $CW_n$ represents the surface density of the modified negative electrode active layer in the nth curved surface area group, $CW_a$ represents a surface density of the base negative electrode active layer of an outside of the negative electrode curved surface area, $L_{an}$ represents an arc length of the negative electrode current collector of the negative electrode curved surface area in the nth curved surface area group, $L_{cn}$ represents an arc length of a positive electrode current collector of the positive electrode curved surface area in the nth curved surface area group, and n is a positive integer $\geq 1$.

In the present embodiment, the surface density of the modified negative electrode active layer in the nth curved surface area group can be calculated by the surface density of the base negative electrode active layer of an outside of the negative electrode curved surface area, the arc length of the negative electrode current collector in the negative electrode curved surface area in the nth curved surface area group, and the arc length of the positive electrode current collector in the positive electrode curved surface area in the nth curved surface area group, so as to design the surface density of the modified negative electrode active layer in the nth curved surface area group, the lithium intercalation of the negative electrode can be matched with the lithium de-intercalation of the positive electrode at the corner of the battery cell, and the problem of lithium precipitation in a negative electrode is avoided.

Optionally, $L_{an}$ and $L_{cn}$ satisfy formula (II) and formula (III) respectively:

$$L_{an} = \pi \times b_n + 2(\sqrt{\frac{a_n^2}{2} - \frac{b_n^2}{4}} - b_n) \quad \text{formula (II);}$$

and

$$L_{cn} = \pi \times (b_n + \lambda_n) + 2(\sqrt{\frac{(a_n+\lambda_n)^2}{2} - \frac{(b_n+\lambda_n)^2}{4}} - b_n) \quad \text{formula (III),}$$

wherein $a_n$ represents a length of a short axis of the negative electrode current collector of the negative electrode curved surface area in the nth curved surface area group, $b_n$ represents a length of a long axis of the negative electrode current collector of the negative electrode curved surface area in the nth curved surface area group, $\lambda_n$ represents a difference between a curvature radius of the positive electrode current collector of the positive electrode curved surface area and a curvature radius of the negative electrode current collector of the negative electrode curved surface area in the nth curved surface area group, and $\pi$ represents the ratio of circumference to diameter.

In an embodiment, a plurality of the curved surface area groups are included, and the surface density of the modified negative electrode active layers in each surface area group are equal.

In an embodiment, the surface density of the modified negative electrode active layer in each curved surface area group satisfies formula (IV):

$$CW_0 = (1 - \frac{L_{a0}}{L_{c0}}) \times CW_a \quad \text{formula (IV)},$$

wherein $CW_0$ represents the surface density of the modified negative electrode active layer in each curved surface area group, $CW_a$ represents a surface density of the base negative electrode active layer of an outside of the negative electrode curved surface area, $L_{a0}$ represents an arc length of the negative electrode current collector of the negative electrode curved surface area in the innermost layer curved surface area group, and $L_{c0}$ represents an arc length of the positive electrode current collector of the positive electrode curved surface area in the innermost layer curved surface area group.

Optionally, $L_{a0}$ and $L_{c0}$ satisfy formula (V) and formula (VI) respectively:

$$L_{a0} = \pi \times b_0 + 2(\sqrt{\frac{a_0^2}{2} - \frac{b_0^2}{4}} - b_0) \quad \text{formula (V)};$$

$$L_{c0} = \pi \times (b_0 + \lambda_0) + 2(\sqrt{\frac{(a_0+\lambda_0)^2}{2} - \frac{(b_0+\lambda_0)^2}{4}} - b_0) \quad \text{formula (VI)},$$

wherein $a_0$ represents a length of a short axis of the negative electrode current collector of the negative electrode curved surface area in the innermost layer curved surface area group, $b_0$ represents a length of a long axis of the negative electrode current collector of the negative electrode curved surface area in the innermost layer curved surface area group, $\lambda_0$ represents a difference between the curvature radius of the positive electrode current collector of the positive electrode curved surface area and the curvature radius of the negative electrode current collector of the negative electrode curved surface area in the innermost layer curved surface area group, and $\pi$ represents the ratio of circumference to diameter.

During the design of the battery cell, when the surface densities of the modified negative electrode active layers in each curved surface area group are equal, the surface density of the modified negative electrode active layer in the innermost layer curved surface area group is taken as a reference, the surface densities of the modified layers in the each curved surface area group are equal and is the surface density of the modified negative electrode active layer in the innermost layer curved surface area group.

It can be understood that when the surface densities of the modified negative electrode active layers in each curved surface area group are equal, the surface density of the modified negative electrode active layer in other curved surface area group is taken as the reference, the surface densities of the modified layers in each curved surface area group are equal and are the surface density of the modified negative electrode active layer in the curved surface area group.

It can further be understood that when the surface densities of the modified negative electrode active layers in each curved surface area group are equal, the surface density of the modified negative electrode active layer in each curved surface area group may also not be equal to the surface densities of the modified negative electrode active layer in one certain curved surface area group in each curved surface area group calculated by formula (V) and formula (VI).

In an embodiment, 1 of the curved surface area group is included, and the surface density of the modified negative electrode active layer in the curved surface area group satisfies formula (IV), wherein $CW_0$ represents the surface density of the modified negative electrode active layer in the curved surface area group. At this time, optionally, $L_{a0}$ and $L_{c0}$ in formula (IV) respectively satisfy formula (V) and formula (VI), wherein $a_0$ represents a length of a short axis of the negative electrode current collector of the negative electrode curved surface area in the curved surface area group, $b_0$ represents a length of a long axis of the negative electrode current collector of the negative electrode curved surface area in the curved surface area group, $\lambda_0$ represents a difference between the curvature radius of the positive electrode current collector of the positive electrode curved surface area and the curvature radius of the negative electrode current collector of the negative electrode curved surface area in the curved surface area group, and $\pi$ represents the ratio of circumference to diameter.

In an embodiment, a ratio of the thickness of the base negative electrode active layer to that of the modified negative electrode active layer is (1-22) : 1. Optionally, the ratio of the thickness of the base negative electrode active layer to that of the modified negative electrode active layer is 1 : 1, 5 : 1, 10 : 1, 15 : 1, 20 : 1, etc.

In an embodiment, the thickness of the base negative electrode active layer is 65 $\mu$m-180 $\mu$m. Optionally, the thickness of the base negative electrode active layer is 65 $\mu$m, 70 $\mu$m, 75 $\mu$m, 80 $\mu$m, 90 $\mu$m, 100 $\mu$m, 120 $\mu$m, 150 $\mu$m, 170 $\mu$m, etc.

In an embodiment, the thickness of the modified negative electrode active layer is 12 $\mu$m-32 $\mu$m. Optionally, the thickness of the modified negative electrode active layer is 12 $\mu$m, 15 $\mu$m, 18 $\mu$m, 20 $\mu$m, 22 $\mu$m, 25 $\mu$m, 28 $\mu$m, 30 $\mu$m, 32 $\mu$m, etc.

In an embodiment, the surface density of the base negative electrode active layer is 90 mg/1540.25 mm$^2$-250 mg/1540.25 mm$^2$. Optionally, the surface density of the base negative electrode active layer is 90 mg/1540.25 mm$^2$, 100 mg/1540.25 mm$^2$, 120 mg/1540.25 mm$^2$, 150 mg/1540.25 mm$^2$, 180 mg/1540.25 mm$^2$, 200 mg/1540.25 mm$^2$, etc.

In an embodiment, the surface density of the modified negative electrode active layer is 16.2 mg/1540.25 mm$^2$-45 mg/1540.25 mm$^2$. Optionally, the surface density of the modified negative electrode active layer is 16.2 mg/1540.25 mm$^2$, 20 mg/1540.25 mm$^2$, 25 mg/1540.25 mm$^2$, 30 mg/1540.25 mm$^2$, 35 mg/1540.25 mm$^2$, 40 mg/1540.25 mm$^2$, 45 mg/1540.25 mm$^2$, etc.

In an embodiment, the positive electrode plate comprises a positive electrode current collector and a positive electrode active layer positioned on a surface of an inside of the positive electrode current collector.

Optionally, the thickness of the positive electrode active layer is 65 $\mu$m-160 $\mu$m. Optionally, the thickness of the positive electrode active layer is 65 $\mu$m, 70 $\mu$m, 75 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, etc.

Optionally, the surface density of the positive electrode active layer is 150 $\mu$m-400 $\mu$m. Optionally, the surface density of the positive electrode active layer is 150 $\mu$m, 180 $\mu$m, 200 $\mu$m, 250 $\mu$m, 300 $\mu$m, 350 $\mu$m, 400 $\mu$m, etc.

The present application further provides a method for preparing the battery cell, characterized by comprising the steps of:

> determining a preset negative electrode curved surface area and a preset positive electrode curved surface area according to a winding process, such that at least one preset curved surface area group composed of the preset negative electrode curved surface area and the preset positive electrode curved surface area positioned outside and adjacent to the preset negative electrode curved surface area is included at a corner of the battery cell; and
> adjusting a ratio of in surface capacity of the two opposite surfaces of the preset negative electrode curved surface area and the preset positive electrode curved surface area in the preset curved surface area group such that the ratio to be $\geq$ 1.

It can be understood that FIG. 2 is a preset curved surface area 301 and a preset flat surface area 302 of an electrode plate 300 determined by a winding process, wherein the preset curved surface area 301 and the preset flat surface area 302 are connected. It can be understood that when the electrode plate is a negative electrode plate, the preset negative electrode curved surface area and the preset negative electrode flat surface area are connected. When the electrode plate is a positive electrode plate, the preset positive electrode curved surface area and the preset positive electrode flat surface area are connected. It can be understood that 4 preset curved surface areas are shown in FIG. 2, and the number of the preset curved surface areas may be set to other values according to the winding process. In FIG. 2, "......" indicates that there may further be one or more preset curved surface areas.

In an embodiment, adjusting the ratio in surface capacity of two opposite surfaces of the preset negative electrode curved surface area and the preset positive electrode curved surface area in the preset curved surface area group comprises the steps of: forming a base negative electrode active layer on an outside surface of at least a preset negative electrode current collector; and forming a modified negative electrode active layer on a surface of the base negative electrode active layer of the preset negative electrode curved surface area.

It can be understood that the outside surface of the preset negative electrode current collector indicates a surface of the negative electrode current collector facing outward after the winding.

It can be understood that the base negative electrode active layer may be formed by coating a basic active slurry and a modified active slurry may be formed by coating the modified active slurry. Optionally, the basic active slurry and the modified active slurry are the same or different.

The secondary battery, battery module, battery pack, and power consuming device of the present application will be described below by appropriately referring to the accompanying drawings.

Typically, a secondary battery comprises a positive electrode plate, a negative electrode plate, an electrolyte and a separator. During the charge/discharge of the battery, active ions are intercalated and deintercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

Positive electrode plate

The positive electrode plate includes a positive electrode current collector and a positive electrode film layer provided on at least one surface of the positive electrode current collector, the positive electrode film layer including a positive electrode active material.

As an example, the positive electrode current collector has two surfaces opposite in its own thickness direction, and the positive electrode active material layer is provided on either or both of the two opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

As an example, the positive electrode active material can be a positive electrode active material for batteries well-known in the art. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g., $LiNi_{0.85}Co_{0.15}Al_{0.05}O_2$), and modified compounds thereof, etc. Examples of lithium -containing phosphates of olivine structure may include, but are not limited to, at least one of lithium iron phosphate (e.g., $LiFePO_4$ (also referred to as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites. The weight ratio of the positive electrode active material in the positive electrode film layer is 80-100 wt%, based on the total weight of the positive electrode film layer.

In some embodiments, the positive electrode film layer may further optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoridehexafluoropropylene-tetrafluoroethylene terpolymer, tetrafluoroethylene-hexafluoropropylene copolymer, and fluorine-containing acrylate resin. The weight ratio of the binder in the positive electrode film layer is 0-20 wt%, based on the total weight of the positive electrode film layer.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers. The weight ratio of the conductive agent in the positive electrode film layer is 0-20 wt%, based on the total weight of the positive electrode film layer.

In some embodiments, the positive electrode plate can be prepared by the above-mentioned components for preparing the positive electrode plate, such as the positive electrode active material, the conductive agent, the binder and any other components, are dispersed in a solvent (e.g., N-methylpyrrolidone) to form a positive electrode slurry, wherein the positive electrode slurry has a solid content of 40-80 wt%, and the viscosity at room temperature thereof is adjusted to 5,000-25,000 mPa·s; and the positive electrode slurry is coated onto the surface of the positive electrode current collector, dried and then cold pressed by means of a cold-rolling mill to form a positive electrode plate, wherein the unit surface density of the positive electrode powder coating is 150-350 mg/m$^2$, and the positive electrode plate has the compacted density of 3.0-3.6 g/cm$^3$, optionally 3.3-3.5 g/cm$^3$. The compacted density is calculated according to the following equation: the compacted density = the surface density of the coating/(the thickness of the electrode plate after pressing - the thickness of the current collector).

It can be understood that in the examples of the present application, the positive electrode plate may be prepared by using the positive electrode plate as a main body of the positive electrode plate, and forming a solid electrolyte interface film on a surface of the main body of the positive electrode plate.

Negative electrode plate

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more. The weight ratio of the negative electrode active material in the negative electrode film layer is 70-100 wt%, based on the total weight of the negative electrode film layer.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight ratio of the binder in the negative electrode film layer is 0-30 wt%, based on the total weight of the negative electrode film layer.

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers. The weight ratio of the conductive agent in the negative electrode film layer is 0-20 wt%, based on the total weight of the negative electrode film layer.

In some embodiments, the negative electrode film layer may optionally comprise other auxiliary agents, such as thickener (e.g., sodium carboxymethyl cellulose (CMC-Na)), etc. The weight ratio of the other auxiliary agents in the negative electrode film layer is 0-15 wt%, based on the total weight of the negative electrode film layer.

In some embodiments, the negative electrode plate can be prepared by the above-mentioned components for preparing the negative electrode plate, such as the negative electrode active material, the conductive agent, the binder and any other components, are dispersed in a solvent (e.g., deionized water) to form a negative electrode slurry, wherein the negative electrode slurry has a solid content of 30-70 wt%, and the viscosity at room temperature thereof is adjusted to 2,000-10,000 mPa•s; and the resulting negative electrode slurry is coated onto a negative electrode current collector, followed by a drying procedure and cold pressing (e.g., double rollers), so as to obtain the negative electrode plate. The unit surface density of the negative electrode powder coating is 75-220 mg/m$^2$, and the negative electrode plate has the compacted density of 1.2-2.0 g/cm$^3$.

It can be understood that in the examples of the present application, the negative electrode plate may be prepared by using the negative electrode plate as a main body of the negative electrode plate, and forming a solid electrolyte interface film on a surface of the main body of the negative electrode plate.

Electrolyte

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO$_2$F$_2$), lithium bisoxalatodifluorophosphate (LiDFOP) and lithium tetrafluorooxalate phosphate (LiTFOP). The concentration of the electrolyte salt is typically 0.5-5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

Separator

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, nonwoven fabrics, polyethylene, polypropylene and polyvinylidene fluoride. The separator may be either a singlelayer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

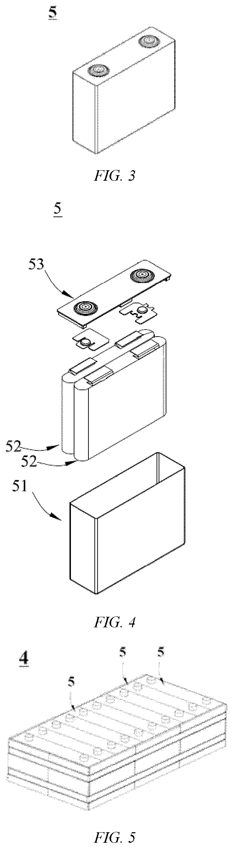

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc. The shape of the secondary battery is not particularly limited in the present application and may be cylindrical, square or of any other shape. For example, Fig. 3 shows a secondary battery 5 with a square structure as an example.

In some embodiments, with reference to FIG. 4, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

FIG. 5 shows a battery module 4 as an example. Referring to Fig. 5, in the battery module 4, a plurality of secondary batteries 5 may be sequentially arranged in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

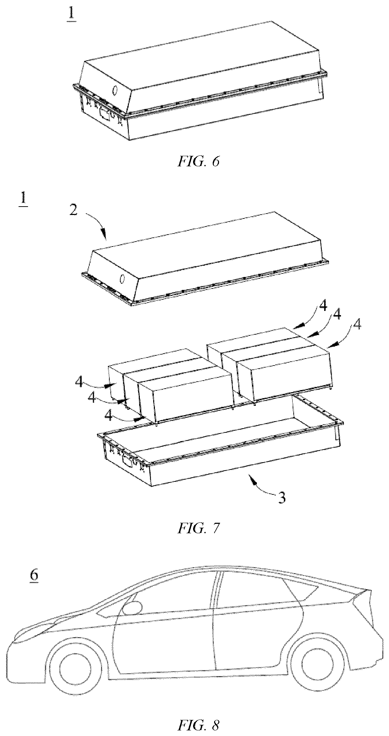

Fig. 6 and Fig. 7 show a battery pack 1 as an example. With reference to Fig. 6 and Fig. 7, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 8 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

Examples

In order to make the technical problems solved by the present application, the technical solutions and the beneficial effects clearer, further detailed description of the present application will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

The examples in which techniques or conditions are not specified are based on the techniques or conditions described in documents in the art or according to the product introduction. The reagents or instruments used therein for which manufacturers are not specified are all conventional products that are commercially available.

Example 1

(1) Preparation of positive electrode plate

A positive electrode active material of ternary material nickel cobalt manganese (NCM), a conductive agent of acetylene black, and a binder of polyvinylidene fluoride (PVDF) were added into a certain amount of NMP at a mass ratio of 97 : 2 : 1, the materials were uniformly stirred to prepare a positive electrode slurry; and the positive electrode slurry was uniformly coated onto an aluminum foil with a thickness of 15 $\mu$m to a surface density of 260 mg/1540.25 cm$^2$, followed by drying, cold-pressing, die-cutting, and slitting to prepare a positive electrode plate.

(2) Preparation of negative electrode plate

(1) Preparation of base negative electrode active layer

A negative electrode active material of graphite, a conductive agent of Super P, a thickener (CMC), and a binder (SBR) were added into a certain amount of water at a mass ratio of 95 : 3 : 1 : 1, and the materials were uniformly stirred to prepare a basic active slurry; and the basic active slurry was uniformly coated onto a copper foil with a thickness of 6 $\mu$m to a surface density of 162 mg/1540.25 cm$^2$, and the plate was dried by an oven to obtain a negative electrode plate preform with a base negative electrode active layer.

(2) Preparation of modified negative electrode active layer

A modified active slurry was coated on a surface of the base negative electrode active layer of a preset negative electrode curved surface area of the negative electrode plate preform obtained in step (1). The modified active slurry is prepared by adding natural graphite, a conductive agent of Super P, a thickener (CMC), and a binder (SBR) at a mass ratio of 95 : 3 : 1 : 1 into water for stirring. The plate was dried by an oven, cold-pressed after the drying, and then die-cut and slit to obtain a negative electrode plate with the base negative electrode active layer and the modified negative electrode active layer. Along the direction from inside to outside of the battery cell, the surface density of the modified negative electrode active layer in each curved surface area group is 29.2 mg/1540.25 cm$^2$, 26.3 mg/1540.25 cm$^2$, 22.4 mg/1540.25 cm$^2$, 17.6 mg/1540.25 cm$^2$, 11.8 mg/1540.25 cm$^2$, and 5.4 mg/1540.25 cm$^2$ in sequence.

(3) Preparation of separator

Polyethylene is used as a base film, and aluminum oxide with a thickness of 3 $\mu$m is coated onto the base film to obtain a separator.

(4) Preparation of electrolyte solution

Lithium hexafluorophosphate was dissolved in a solvent with a volume ratio of DMC : DEC : EC at 1 : 1 : 1 to obtain an electrolyte solution for lithium-ion batteries.

(5) Preparation of secondary battery

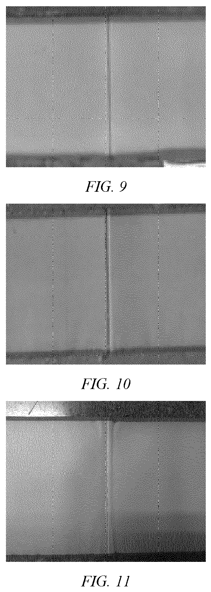

The positive electrode plate, the negative electrode plate, and the separator were wound, followed by the processes of packaging, electrolyte injection, formation, etc., to obtain the secondary battery in the present example. The formation was conducted as follows: firstly the battery was charged to 3.0 V at 0.02 C, then charged to 3.4 V at 0.1 C, and finally charged to 4.2 V at 0.2 C. Fig. 9 is a topography of a disassembled negative electrode plate of a battery cell after formation in the present example.

Example 2

Compared with example 1, the difference of the present example was that when the modified negative electrode active layer was prepared in the preparation of negative electrode plate in step (2), the modified slurry was the same as the basic active slurry.

Example 3

Compared with example 1, the difference of the present example was that when the modified negative electrode active layer was prepared in the preparation of negative electrode plate in step (2), the modified slurry was prepared by adding artificial graphite, a silicon oxide material (at least including $SiO_x$, wherein $0 < x < 2$), conductive carbon of Super P, a thickener (CMC), and a binder (SBR) at a mass ratio of 92 : 3 : 3 : 1 : 1 into water for stirring.

Example 4

Compared with example 1, the difference of the present example was that when the modified negative electrode active layer was prepared in the preparation of negative electrode plate in step (2), the surface densities of the modified negative electrode active layers in each curved surface area group were equal and 29.2 mg/1540.25 cm$^2$. Fig. 10 is a topography of a disassembled negative electrode plate of a battery cell after formation in the present example.

Comparative example 1

Compared with example 1, the difference of the present comparative example was that the modified negative electrode active layer was not prepared in the preparation of negative electrode plate in step (2). Fig. 11 is a topography of a disassembled negative electrode plate of a battery cell after formation in the comparative example.

Comparative example 2

Compared with example 1, the difference of the present comparative example was that along the direction from inside to outside of the battery cell, the surface density of the modified negative electrode active layer in each curved surface area group was 5.4 mg/1540.25 cm$^2$, 11.8 mg/1540.25 cm$^2$, 17.6 mg/1540.25 cm$^2$, 22.4 mg/1540.25 cm$^2$, 26.3 mg/1540.25 cm$^2$, and 29.2 mg/1540.25 cm$^2$ in sequence.

Comparative example 3

Compared with example 1, the difference of the present comparative example was that when the modified negative electrode active layer was prepared in the preparation of negative electrode plate in step (2), the surface densities of the modified negative electrode active layers in each curved surface area group were equal and 11.8 mg/1540.25 cm$^2$.

Comparative example 4

Compared with example 1, the difference of the present comparative example was that when the modified negative electrode active layer was prepared in the preparation of negative electrode plate in step (2), the modified negative active layer was prepared only in the innermost layer curved surface area group, and the surface density was 29.2 mg/1540.25 cm$^2$.

## EP 4 564 447 A1

Table 1

| No. | Lithium precipitation degree | Capacity retention rate after 10 cycles |
|---|---|---|
| Example 1 | No lithium precipitation | 99.9% |
| Example 2 | No lithium precipitation | 99.9% |
| Example 3 | No lithium precipitation | 99.9% |
| Example 4 | No lithium precipitation | 99.9% |
| Comparative example 1 | Severe lithium precipitation | 99.1% |
| Comparative example 2 | Moderate lithium precipitation | 99.4% |
| Comparative example 3 | Slight lithium precipitation | 99.6% |
| Comparative example 4 | Moderate lithium precipitation | 99.3% |

The lithium precipitation degree is evaluated by observing the disassembled negative electrode plate. The results are shown in Table 1. After fully charged, the battery was disassembled and observed in the environment with an air humidity lower than 2%, and the lithium precipitation degree is determined by the color depth of the lithium precipitation: Slight lithium precipitation: light grey Moderate lithium precipitation: grey white Severe lithium precipitation: bright white Meanwhile, when no lithium was precipitated, a ratio in surface capacity of the two opposite surfaces of the negative electrode curved surface area and the positive electrode curved surface area is $\geq 1$.

Test method for capacity retention rate after 10 cycles:

Test conditions: At normal temperature, the battery was fully charged at a rate of 0.5 C and fully discharged at a rate of 0.5 C for a cycle test until the capacity of the battery decayed to 80% of the initial capacity.

Testing process: The battery was left to stand for 30 minutes, then charged at a rate of 0.5 C to a voltage of 4.25 V, further charged at a constant voltage of 4.25 V to a current of 0.05 C, stood for 5 minutes, and then discharged at a rate of 0.5 C to a voltage of 2.5 V, which was a charge-discharge cycle. The discharge capacity was recorded during each cycle.

Capacity retention rate (%) after n cycles = (discharge capacity at nth cycle/discharge capacity at first cycle) $\times$ 100%. The results are shown in Table 1.

It can be seen from Table 1 that the problem of lithium precipitation in the examples is better avoided and the battery performances are improved accordingly.

The various technical features of the above examples can be combined in any manner, and in order to simplify the description, not all possible combinations of the various technical features of the above examples are described. However, the technical features should be considered to be within the scope of the description in the description, as long as there is no conflict between the combinations of the technical features.

The above examples merely represent several implementations of the present application, giving specifics and details thereof, but should not be understood as limiting the scope of the present patent of invention thereby. It should be noted that several variations and improvements may also be made by those of ordinary skill in the art without departing from the concept of the present application, and should fall within the scope of protection of the present application. Therefore, the scope of protection of the present application shall be defined by the appended claims.

## Claims

1. A battery cell formed by winding a negative electrode plate, a positive electrode plate, and a separator positioned between the negative electrode plate and the positive electrode plate, wherein the negative electrode plate has a negative electrode curved surface area, and the positive electrode plate has a positive electrode curved surface area; and at least one curved surface area group composed of the negative electrode curved surface area and the positive electrode curved surface area positioned outside and adjacent to the negative electrode curved surface area is included at a corner of the battery cell, and at least one of the curved surface area group in the battery cell meets the following condition: a ratio of in surface capacity of the two opposite surfaces of the negative electrode curved surface area and the positive electrode curved surface area is $\geq 1$.

2. The battery cell according to claim 1, **characterized in that** the negative electrode plate comprises a negative electrode current collector, a base negative electrode active layer, and a modified negative electrode active layer; and the base negative electrode active layer is located at least on a surface of an outside of the negative electrode current collector, the modified negative electrode active layer is located at a surface of the base negative electrode active layer of an outside of the negative electrode curved surface area, and the surface density of the modified negative electrode active layer is less than that of the base negative electrode active layer of the outside of the negative electrode curved surface area.

3. The battery cell according to claim 2, **characterized in that** a plurality of the curved surface area groups are included, and the surface density of the modified negative electrode active layer in each curved surface area group is gradually reduced along the direction from inside to outside of the battery cell.

4. The battery cell according to claim 3, **characterized in that** along the direction from inside to outside of the battery cell, the surface density of the modified negative electrode active layer in the adjacent curved surface area groups is reduced at a level of 1.6 mg/1540.25 $mm^2$-45 mg/1540.25 $mm^2$.

5. The battery cell according to claim 3 or 4, **characterized in that** the surface density of the modified negative electrode active layer in each curved surface area group satisfies formula (I):

$$CW_n = (1 - \frac{L_{an}}{L_{cn}}) \times CW_a \quad \text{formula (I)},$$

wherein $CW_n$ represents a surface density of the modified negative electrode active layer in the nth curved surface area group, $CW_a$ represents a surface density of the base negative electrode active layer of an outside of the negative electrode curved surface area, $L_{an}$ represents an arc length of the negative electrode current collector of the negative electrode curved surface area in the nth curved surface area group, $L_{cn}$ represents an arc length of a positive electrode current collector of the positive electrode curved surface area in the nth curved surface area group, and n is a positive integer $\geq 1$.

6. The battery cell according to claim 5, **characterized in that** $L_{an}$ and $L_{cn}$ satisfy formula (II) and formula (III) respectively:

$$L_{an} = \pi \times b_n + 2(\sqrt{\frac{a_n^2}{2} - \frac{b_n^2}{4}} - b_n) \quad \text{formula (II)};$$

and

$$L_{cn} = \pi \times (b_n + \lambda_n) + 2(\sqrt{\frac{(a_n+\lambda_n)^2}{2} - \frac{(b_n+\lambda_n)^2}{4}} - b_n) \quad \text{formula (III)},$$

wherein $a_n$ represents a length of a short axis of the negative electrode current collector of the negative electrode curved surface area in the nth curved surface area group, $b_n$ represents a length of a long axis of the negative electrode current collector of the negative electrode curved surface area in the nth curved surface area group, $\lambda_n$ represents a difference between a curvature radius of the positive electrode current collector of the positive electrode curved surface area and a curvature radius of the negative electrode current collector of the negative electrode curved surface area in the nth curved surface area group, and $\pi$ represents the ratio of circumference to diameter.

7. The battery cell according to claim 2, **characterized in that** a plurality of the curved surface area groups are included, and the surface densities of the modified negative electrode active layers in each curved surface area group are equal.

8. The battery cell according to claim 7, **characterized in that** the surface density of the modified negative electrode active layer in each curved surface area group satisfies formula (IV):

$$CW_0 = (1 - \frac{L_{a0}}{L_{c0}}) \times CW_a \quad \text{formula (IV)},$$

wherein $CW_0$ represents a surface density of the modified negative electrode active layer in each curved surface area group, $CW_a$ represents a surface density of the base negative electrode active layer of an outside of the negative electrode curved surface area, $L_{a0}$ represents an arc length of the negative electrode current collector of the negative electrode curved surface area in the innermost layer curved surface area group, and $L_{c0}$ represents an arc length of the positive electrode current collector of the positive electrode curved surface area in the innermost layer curved surface area group.

9. The battery cell according to claim 8, **characterized in that** $L_{a0}$ and $L_{c0}$ satisfy formula (V) and formula (VI) respectively:

$$L_{a0} = \pi \times b_0 + 2\left(\sqrt{\frac{a_0^2}{2} - \frac{b_0^2}{4}} - b_0\right) \quad \text{formula (V);}$$

$$L_{c0} = \pi \times (b_0 + \lambda_0) + 2\left(\sqrt{\frac{(a_0+\lambda_0)^2}{2} - \frac{(b_0+\lambda_0)^2}{4}} - b_0\right) \quad \text{formula (VI),}$$

wherein $a_0$ represents a length of a short axis of the negative electrode current collector of the negative electrode curved surface area in the innermost layer curved surface area group, $b_0$ represents a length of a long axis of the negative electrode current collector of the negative electrode curved surface area in the innermost layer curved surface area group, $\lambda_0$ represents a difference between a curvature radius of the positive electrode current collector of the positive electrode curved surface area and a curvature radius of the negative electrode current collector of the negative electrode curved surface area in the innermost layer curved surface area group, and $\pi$ represents the ratio of circumference to diameter.

10. The battery cell according to claim 2, **characterized in that** 1 of the curved surface area group is included, and the surface density of the modified negative electrode active layer in the curved surface area group satisfies formula (IV), wherein $CW_0$ represents the surface density of the modified negative electrode active layer in the curved surface area group.

11. The battery cell according to claim 10, **characterized in that** $L_{a0}$ and $L_{c0}$ in formula (IV) respectively satisfy formula (V) and formula (VI), wherein $a_0$ represents a length of a short axis of the negative electrode current collector of the negative electrode curved surface area in the curved surface area group, $b_0$ represents a length of a long axis of the negative electrode current collector of the negative electrode curved surface area in the curved surface area group, $\lambda_0$ represents a difference between a curvature radius of the positive electrode current collector of the positive electrode curved surface area and a curvature radius of the negative electrode current collector of the negative electrode curved surface area in the curved surface area group, and $\pi$ represents the ratio of circumference to diameter.

12. The battery cell according to any one of claims 2-11, **characterized by** satisfying one or more of the following features:

(1) the ratio of the thickness of the base negative electrode active layer to that of the modified negative electrode active layer is (1-22) : 1;
(2) the thickness of the base negative electrode active layer is 65 $\mu$m-180 $\mu$m;
(3) the thickness of the modified negative electrode active layer is 12 $\mu$m-32 $\mu$m;
(4) the surface density of the base negative electrode active layer is 90 mg/1540.25 mm$^2$-250 mg/1540.25 mm$^2$; and
(5) the surface density of the modified negative electrode active layer in the innermost layer curved surface area group is 16.2 mg/1540.25 mm$^2$-45 mg/1540.25 mm$^2$.

13. The battery cell according to any one of claims 1-12, **characterized in that** the positive electrode plate comprises a positive electrode current collector and a positive electrode active layer positioned on a surface of an inside of the positive electrode current collector;

optionally, the thickness of the positive electrode active layer is 65 $\mu$m-160 $\mu$m; and
optionally, the surface density of the positive electrode active layer is 150 $\mu$m-400 $\mu$m.

14. A method for preparing a battery cell according to any one of claims 1-13, **characterized by** comprising the steps of:

determining a preset negative electrode curved surface area and a preset positive electrode curved surface area according to a winding process, such that at least one preset curved surface area group composed of the preset negative electrode curved surface area and the preset positive electrode curved surface area positioned outside and adjacent to the preset negative electrode curved surface area is included at a corner of the battery cell; and adjusting a ratio in surface capacity of the two opposite surfaces of the preset negative electrode curved surface area and the preset positive electrode curved surface area in the preset curved surface area group such that the ratio is $\geq 1$.

15. A secondary battery, **characterized by** comprising a battery cell according to any one of claims 1-13.

16. A power consuming device, **characterized by** comprising a secondary battery according to claim 15.

FIG. 1

FIG. 2

**5**

*FIG. 3*

**5**

*FIG. 4*

*FIG. 5*

1

FIG. 6

1

2

4
4
4

4
4
4

3

FIG. 7

6

FIG. 8

FIG. 9

FIG. 10

FIG. 11

## INTERNATIONAL SEARCH REPORT

| | International application No. |
|---|---|
| | **PCT/CN2022/130207** |

| A. | CLASSIFICATION OF SUBJECT MATTER |
|---|---|

H01M4/13(2010.01)i; H01M10/0587(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI: 电池, 负极, 正极, 卷绕, 拐角, 曲面, 面容量, battery, negative electrode, positive electrode, wind, corner, curved surface, surface capacity

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115084428 A (DONGGUAN LIWINON ENERGY TECH CO., LTD.) 20 September 2022 (2022-09-20) description, paragraphs 2 and 31-86, and figures 1-3 | 1-16 |
| X | CN 113381080 A (GUANGDONG APOWER ELECTRONICS CO., LTD.) 10 September 2021 (2021-09-10) description, paragraphs 2 and 32-50, and figures 1-4 | 1-16 |
| X | WO 2022165690 A1 (NINGDE CONTEMPORARY AMPEREX TECHNOLOGY CO., LTD.) 11 August 2022 (2022-08-11) description, paragraphs 90-245, and figures 1-27 | 1-16 |
| X | CN 114744147 A (NINGDE CONTEMPORARY AMPEREX TECHNOLOGY CO., LTD.) 12 July 2022 (2022-07-12) description, paragraphs 35-131, and figures 1-11 | 1, 13-16 |
| X | CN 105958124 A (DONGGUAN AMPEREX TECHNOLOGY LIMITED et al.) 21 September 2016 (2016-09-21) description, paragraphs 2 and 55-130, and figures 1-5 | 1, 13-16 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 July 2023** | **01 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/130207** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012174582 A (DENSO CORP.) 10 September 2012 (2012-09-10) entire document | 1-16 |

Form PCT/ISA/210 (second sheet) (July 2022)

## INTERNATIONAL SEARCH REPORT
### Information on patent family members

International application No.

**PCT/CN2022/130207**

| Patent document cited in search report | | | Publication date (day/month/year) | Patent family member(s) | | | Publication date (day/month/year) |
|---|---|---|---|---|---|---|---|
| CN | 115084428 | A | 20 September 2022 | None | | | |
| CN | 113381080 | A | 10 September 2021 | CN | 113381080 | B | 10 June 2022 |
| WO | 2022165690 | A1 | 11 August 2022 | US | 2022320596 | A1 | 06 October 2022 |
| | | | | EP | 4068452 | A1 | 05 October 2022 |
| | | | | CN | 115210925 | A | 18 October 2022 |
| CN | 114744147 | A | 12 July 2022 | CN | 114744147 | B | 11 October 2022 |
| CN | 105958124 | A | 21 September 2016 | CN | 105958124 | B | 24 July 2018 |
| JP | 2012174582 | A | 10 September 2012 | JP | 5622048 | B2 | 12 November 2014 |

Form PCT/ISA/210 (patent family annex) (July 2022)